# EUROPÄISCHE PATENTANMELDUNG

(11) **EP 1 726 404 A1**
(43) Veröffentlichungstag der Anmeldung: **29.11.2006**
(21) Anmeldenummer: 06008900.0
(22) Anmeldetag: 28.04.2006
(51) Int. Cl.: B25B 11/00, B23D 47/04, B23D 47/02, B27B 5/065

(54) **Auflagetisch mit verstellbaren Saugvorrichtungen**

(30) Priorität: 02.05.2005 AT 7562005
(71) Anmelder: Panhans Maschinenbau Gmbh, 4563 Micheldorf (AT)
(72) Erfinder: Lechner, Rudolf, 4552 Wartberg an der Krems (AT)
(74) Vertreter: Secklehner, Günter

(57) **Zusammenfassung**

Die Erfindung betrifft einen Auflagetisch (57) mit einer horizontalen Auflagefläche (10) für Werkstücke umfassend ein Maschinengestell (58) mit einem daran angeordneten, zumindest einen Teil der Auflagefläche (10) ausbildenden Tischelement (59). Am Maschinengestell (58) ist ein Vakuumelement (62) zum Spannen eines Werkstücks (2) gegen das Tischelement (59) angeordnet.

## Beschreibung

Die Erfindung betrifft einen Auflagetisch mit einer horizontalen Auflagefläche für Werkstücke, umfassend ein Maschinengestell mit einem daran angeordneten, zumindest einen Teil der Auflagefläche ausbildenden Tischelement und eine Bearbeitungseinrichtung mit dem erfindungsgemäßen Auflagetisch.

Aus dem Stand der Technik sind bereits verschiedene Formen von Auflagetischen zur Bearbeitung von Werkstücken bekannt, wobei zum sicheren Durchführen der Bearbeitungsschritte ein Fixieren der Werkstücke in einer definierten Position auf dem Auflagetisch erforderlich ist. Häufig werden dazu mechanische Spanneinrichtungen eingesetzt, die mit einem Spannelement das Werkstück gegen die Auflagefläche drücken und dadurch in seiner Position fixieren. Nachteilig ist bei diesen Systemen, dass eine Rundumbearbeitung des Werkstücks in einer Aufspannung nicht möglich ist und ein die Bearbeitungszeit verlängernder Umspannvorgang erforderlich ist. Zur Vermeidung dieses Nachteils sind insbesondere Auflagetische entwickelt worden, bei denen das Werkstück durch Vakuumelemente in seiner Position fixiert wird.

Aus EP 1 175 957 B1 ist ein Maschinengestell mit einer Auflagefläche zum Transportieren, Unterstützen und Fixieren von Glastafeln bekannt. Der Aufbau umfasst eine am Maschinengestell angeordnete Fördereinrichtung, die eine horizontale Auflagefläche bildet, die sich von einem Zuführungsbereich durch einen Bearbeitungsbereich zu einem Abnahmebereich erstreckt. Diese ist durch mehrere in Förderrichtung angeordnete, voneinander beabstandete Riemenförderer gebildet. Zur Fixierung der Glastafeln sind Festhalteelemente, die als Vakuumelemente ausgebildet sind vorgesehen. Jeweils mehrere Vakuumelemente sind dabei auf mehreren Trägem angeordnet, die quer zur Förderrichtung angeordnet sind und durch einen Riemenantrieb in Förderrichtung positionierbar sind. Die einzelnen Vakuumelemente sind jeweils durch ein Stellorgan, insbesondere einen Pneumatikzylinder von einer unteren Ruheposition in eine obere Arbeitsposition verstellbar, wobei sich die Vakuumelemente in der Ruheposition unterhalb der vom Riemenförderer gebildeten Auflagefläche für die Glastafeln befinden und in der Arbeitsposition die zu bearbeitende Glastafel von den Vakuumelementen vom Riemenförderer abgehoben und fixiert wird. Von Nachteil bei dieser Ausführung eines Auflagetisches ist die Gefahr einer ungenauen Höhenpositionierung der Glastafel, da die Auflagefläche durch die in die Arbeitsposition angehobenen Vakuumelemente definiert wird und die elastischen Eigenschaften der im Vakuumelement enthaltenen Dichtelemente sowie mögliche Abnützungserscheinungen an den Vakuumelementen und deren Stellorgane die Höhenpositionierung beeinflussen.

In DE 90 13 640 U1 wird eine Vorschubvorrichtung zum Zuführen von Werkstückplatten in Plattensägen beschrieben, mit der ein automatisches Drehen von Werkstückplatten zwischen zwei Bearbeitungsschritten möglich ist. Dabei wird eine an sich bekannte Plattensäge mit einem Werkstückauflagetisch ausgestattet, der einen um eine vertikale Achse um vorbestimmte Drehwinkel verdrehbaren und entlang der vertikalen Achse zwischen zwei Endstellungen verstellbar geführten Drehteller aufweist. Der Drehteller ist an seiner Oberseite mit Saugnäpfen versehen, die in der oberen Endstellung eine in der Werkstückauflageebene aufliegende Unterseite eines Werkstückes kontaktiert und anschließend mit einer Unterdruckquelle verbunden wird. Zur Positionierung der Werkstückplatten nach dem Drehvorgang umfasst die Vorschubvorrichtung weiters eine Anschlagvorrichtung und eine Verstellvorrichtung. Zur Reibungsverminderung weist der Werkstückauflagetisch an seiner Oberseite eine Vielzahl von die Werkstückauflageebene definierenden, reibungsmindernden Plattenauflagestellen auf, insbesondere ist der Werkstückauflagetisch als Luftkissentisch ausgebildet. Die Vakuumelemente dienen bei dieser Anordnung dazu, ein Drehmoment auf die auf dem Werkstückauflagetisch aufliegenden Werkstücke zu übertragen, wobei der Drehvorgang durch die Ausführung des Auflagetisches als Luftkissentisch erleichtert wird.

Weiters ist eine Bearbeitungseinrichtung, insbesondere eine Platten-Aufteilsäge für plattenförmige Werkstücke mit einem Maschinengestell, einem Maschinentisch für die Bearbeitung eines Werkstücks, einer Zuführeinrichtung für die Werkstücke, einem oberhalb des Maschinentischs angeordneten, in zur Auflagefläche senkrechter Richtung verstellbaren Druckbalken zum Spannen des Werkstücks gegen die Auflagefläche, einem im Maschinengestell in einer Linearführungsanordnung mit einer Antriebsvorrichtung horizontal verstellbaren Laufwagen mit zumindest einem Bearbeitungsaggregat, insbesondere einer Kreissägevorrichtung bekannt. Diese umfasst weiters eine mit Greifmitteln, z.B. Spannzangen, versehenen und in zu einer Verstellrichtung des Laufwagens senkrechten Bewegungsrichtung mittels eines Vorschubantriebes in Führungsbahnen horizontal verstellbaren Breitenanschlag zur Bewegung der Werkstücke entlang der Auflagefläche sowie eine Steuer- und Regeleinrichtung für die Bearbeitungseinrichtung. Zur, gegebenenfalls zeitgleichen Durchführung von zusätzlichen Bearbeitungsschritten, ist auf einem im Bereich zwischen dem Druckbalken und dem Breitenanschlag angeordneten, verstellbaren Vorrichtungsträger ein weiteres Bearbeitungsaggregat befestigt.

Ausgehend von diesem Stand der Technik liegt der Erfindung die Aufgabe zugrunde, die Bearbeitungsmöglichkeiten und die Flexibilität einer Bearbeitungseinrichtung, insbesondere einer Plattenaufteilsäge durch einen verbesserten Auflagetisch weiter zu erhöhen.

Die Aufgabe der Erfindung wird durch die im Kennzeichenteil des Anspruchs 1 wiedergegebenen Merkmale gelöst. Vorteilhaft ist, dass das Werkstück auch im fixierten Zustand in der durch das Tischelement gebildeten Auflagefläche verbleibt und während der Bearbeitung nicht von der Auflagefläche abgehoben ist. Dadurch kann mit dem erfindungsgemäßen Auflagetisch das Spannen eines Werkstücks ohne Veränderung seiner Lage durchgeführt werden, und dadurch ein bereits durch andere Spanneinrichtungen außerhalb des Auflagetisches in der Auflagefläche fixiertes Werkstück zusätzlich gespannt werden. Die außerhalb des Auflagetisches wirkenden Spanneinrichtungen können deshalb bei Bedarf deaktiviert werden, und damit verbundene Einrichtungen für andere Aufgaben genützt werden. Zusätzlich ist die Werkstückposition durch ein Spannen gegen eine feste, stillstehende Tischoberfläche dauerhaft definiert, während bei einem Spannen gegen höhenverstellbare Vakuumelemente Ungenauigkeiten durch Positionierfehler oder Abnützung von, die Auflagepunkte definierenden, Dichtelementen auftreten kann. Weiters ist durch die flächige Auflage bei wenig biegesteifen, z.B. plattenförmigen Werkstücken eine Durchbiegung durch Eigengewicht weitgehend vermieden.

Vorteilhaft ist auch die Weiterbildung des Auflagetisches gemäß Anspruch 2, wobei durch die Absenkbarkeit des Vakuumelements insbesondere auch die Dichtelemente oder Dichtflächen des Vakuumelements bei Bewegungen eines Werkstücks entlang der Auflagefläche nicht berührt werden und geschont werden. Weiters kann ein durch das Absenken eines oder mehrerer Vakuumelemente entstehender freier Raum im Bereich des Auflagetisches für andere Zwecke genützt werden. Das Absenken des Vakuumelements kann geradlinig entlang einer Linearführung aber in Form einer Kurve erfolgen z.B. in einer Schwenkbewegung.

Die Ausbildung des Auflagetisches nach Anspruch 3 mit zu Vakuumleisten zusammengefassten Vakuumelementen ermöglicht verringerten baulichen Aufwand zur Anbindung der einzelnen Vakuumelemente am Maschinengestell sowie an der Evakuierungseinrichtung und der Steuer- und Regeleinrichtung sowie einfachere Wartung und Reparatur.

Von Vorteil ist eine Ausführung des Auflagetisches auch nach Anspruch 4 mit einer aus mehreren Tischelementen gebildeten Auflagefläche und unmittelbar daran angrenzenden Vakuumelementen und/oder Vakuumleisten, da eine große Auflagefläche für flächige Werkstücke vorteilhaft ist, und die nach oben wirkenden Stützkräfte und nach unten wirkenden Spannkräfte auf das Werkstück durch geringe Abstände der Kraftangriffspunkte nur ein geringes Moment und damit auch nur geringe Verwindung von wenig biegesteifen Werkstücken ergeben.

Eine weitere vorteilhafte Ausführung des Auflagetisches ist gemäß Anspruch 5 eine Abfolge von abwechselnd jeweils einer Vakuumleiste und einem unmittelbar angrenzenden Tischelement, wodurch die Auflagefläche von den Vakuumleisten unterteilt wird und bei kleinen Tischelementen und Abständen zwischen den Vakuumleisten auch dementsprechend kleine Werkstücke zumindest von zwei Vakuumelementen gegen die Auflagefläche gespannt werden können.

Vorteilhaft ist die Ausbildung des Auflagetisches nach Anspruch 6, wonach mehrere Vakuumelemente und/oder Vakuumleisten auf einem Tragorgan angeordnet sind und dieses durch einen Stellantrieb entlang einer Führungsanordnung vertikal verstellbar ist, da diese Anordnung eine einfache Bauweise und reduzierten Steuerungsaufwand bewirkt, da mehrere Vakuumelemente und/oder Vakuumelemente gleichzeitig mit einem Signaleingang und -ausgang angesteuert werden können.

Die Ausbildung des Auflagetisches mit Öffnungen zur Beaufschlagung der Werkstückunterseite mit Druckluft gemäß Anspruch 7, insbesondere mit Ausbildung der Tischelemente als Luftkissentisch bewirkt eine Reduktion der zum Verschieben eines Werkstückes entlang der Auflageebene erforderlichen Kraft, da die Reibung durch einen Luftpolstereffekt stark reduziert werden kann. Dadurch kann mit dem erfindungsgemäßen Auflagetisch eine reibungsreduzierte Auflagefläche mit annähernd punktförmiger Auflage des Werkstückes, z.B. eine Röllchenbahn durch einen Tisch mit flächiger Werkstückauflage ersetzt werden, ohne dass die erforderlichen Vorschubkräfte dadurch stark erhöht werden. Weiters sinkt durch den Luftfilm zwischen Auflagefläche und Werkstückunterseite die Gefahr von Kratzern z.B. durch Späne und Staub, die sich zwischen Werkstück und Tischoberfläche befinden und über die das Werkstück geschoben wird.

Vorteilhaft ist die Weiterbildung des Auflagetisches nach Anspruch 8, mit durch das Werkstück betätigten Ventilen in den Öffnungen zum Austritt von Druckluft in den Tischelementen, da der Druckluftaustritt auf die von einem Werkstück überdeckten Öffnungen beschränkt wird und der Druckluftverbrauch dadurch deutlich gesenkt werden kann.

Die Ausbildung des Auflagetisches nach den Ansprüchen 9 und 10, wonach ein Ansaugen einer Werkstückunterseite erst nach Vakuumelement bei Aufliegen eines Werkstückes aktiviert wird und das den Evakuierungsvorgang auslösende Ventil durch das Werkstück selbst betätigt wird, reduziert den erforderlichen Aufwand für Aufbau und Steuerung des Auflagetisches, da zusätzliche Sensorelemente, die ein Anliegen eines Werkstückes auf einem Vakuumelement erkennen, entfallen können. Das Ansaugen von Luft über Vakuumelemente, die nicht von einem Werkstück bedeckt sind wird dadurch vermieden, wodurch die zum Erreichen eines bestimmten Unterdrucks erforderliche Evakuierungseinrichtung mit geringerer Leistung und geringerem Energieverbrauch arbeitet.

Die Erfindung wird weiters gemäß Anspruch 11 durch Ausstattung einer Bearbeitungseinrichtung mit einem Auflagetisch nach einem der Ansprüche 1 bis 10 gelöst. Durch die vorhin beschriebenen Merkmale und Effekte erhöhen sich Flexibilität und Einsatzbereich von Bearbeitungsmaschinen unterschiedlicher Arten.

Die Ausbildung einer Bearbeitungseinrichtung, insbesondere einer Plattenaufteilsäge nach Anspruch 12 ist besonders vorteilhaft, da durch den erfindungsgemäßen Auflagetisch neben dem Druckbalken und dem Breitenanschlag mit Spannzangen eine dritte, weitgehend unabhängige Einrichtung zum Spannen von Werkstücken geschaffen ist. Dadurch können die zum Zuführen, Positionieren, Spannen, Bearbeiten und Abführen von Werkstücken erforderlichen Abläufe optimiert werden, z.B. um Maschinennebenzeiten zu verringern.

Durch eine Weiterbildung der Bearbeitungseinrichtung gemäß Anspruch 13 mit einem zusätzlichen Bearbeitungsaggregat werden die Vorteile des erfindungsgemäßen Auflagetisches besonders wirksam. Insbesondere die Aufspannung der Werkstücke ohne an der Oberseite angreifende mechanische Spannelemente bietet die Möglichkeit zusätzliche Bearbeitungsschritte an Werkstücken, hauptsächlich Platten, innerhalb der Bearbeitungseinrichtung durchzuführen. Beispielsweise können neben dem Zuschnitt von Möbelplatten zusätzlich Bohrungen in der Fläche, wie sie z.B. bei Seitenwänden von Regalen erforderlich sind, innerhalb der Bearbeitungseinrichtung ausgeführt werden, während dies bisher auf anderen Maschinen oder manuell durchgeführt werden musste.

Vorteilhaft ist auch die Ausbildung der Bearbeitungseinrichtung wie in Anspruch 14 beschrieben mit Anordnung der absenkbaren Vakuumleisten fluchtend mit dem Verfahrweg der Spannzangen des Breitenanschlages, da die Vakuumelemente während der Werkstückpositionierbewegung nicht aktiv sind und die in den Tischelementen erforderlichen nutförmigen Bewegungsräume für die unter der Auflagefläche liegenden Teile der Spannzangen durch das, aus wie oben beschrieben, vorteilhafte Absenken der Vakuumelemente ohnehin entstehen und dadurch die von den Tischelementen gebildete Auflagefläche möglichst groß ist.

Im Gegensatz dazu kann es auch vorteilhaft sein, die Vakuumleisten gegenüber den Spannzangen zu versetzen und in den Tischelementen zusätzliche Bewegungsräume für die unter der Auflagefläche liegenden Teile der Spannzangen vorzusehen, wodurch ein Fixieren des Werkstücks durch die Vakuumleisten vor dem Lösen der Spannzangen auch bei Werkstücken mit kleineren Abmessungen möglich ist, da dadurch eine Kollision zwischen Spannzangen und nicht abgesenkten Vakuumleisten unmöglich ist.

Die Weiterbildung der Bearbeitungseinrichtung nach Anspruch 15 mit zwischen Auflagetisch und Zuführeinrichtung über die Auflagefläche verstellbaren Anschlagelementen bietet eine zusätzliche Möglichkeit das Werkstück innerhalb der Bearbeitungseinrichtung in eine definierte Position zu bringen und gleichzeitig ein Verschieben des gegebenenfalls noch nicht vom Auflagetisch gespannten Werkstücks durch das Lösen und Zurückfahren der Spannzangen zu vermeiden.

Es zeigen:
- Fig. 1: eine Bearbeitungseinrichtung mit dem erfindungsgemäßen Auflagetisch in Draufsicht in stark vereinfachter Darstellung;
- Fig. 2: die Bearbeitungseinrichtung mit dem erfindungsgemäßen Auflagetisch in Schnittdarstellung gemäß den Linien II-II in Fig. 1;
- Fig. 3: eine Schnittdarstellung eines Vakuumelements des erfindungsgemäßen Auflagetischs gemäß den Linien III-III in Fig. 2 im Ruhezustand ohne Kontakt mit einer Werkstückunterseite;
- Fig. 4: eine Schnittdarstellung eines Vakuumelements des erfindungsgemäßen Auflagetischs gemäß den Linien III-III in Fig. 2 im Betriebszustand in Kontakt mit einer Werkstückunterseite.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

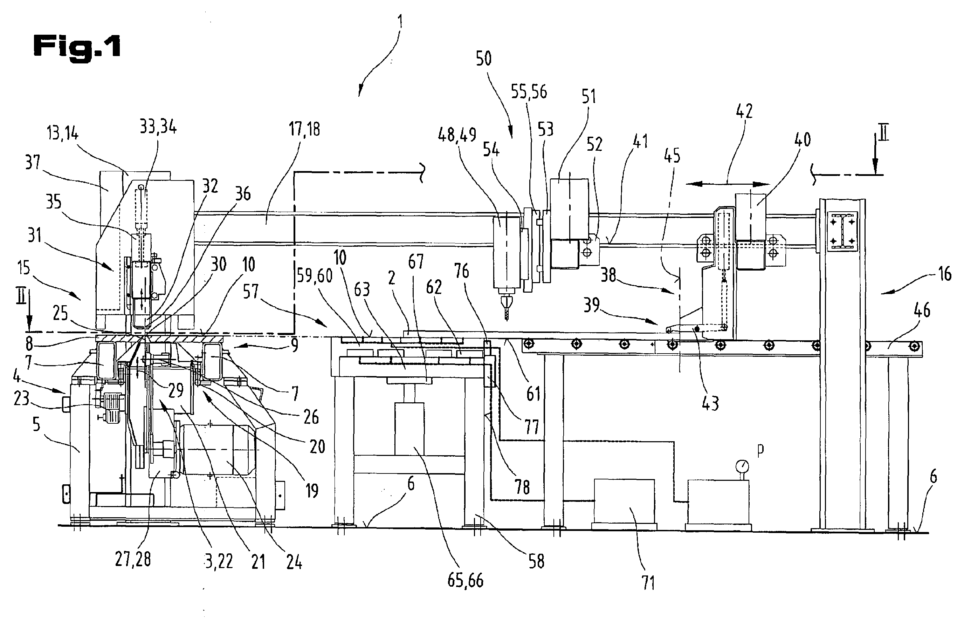

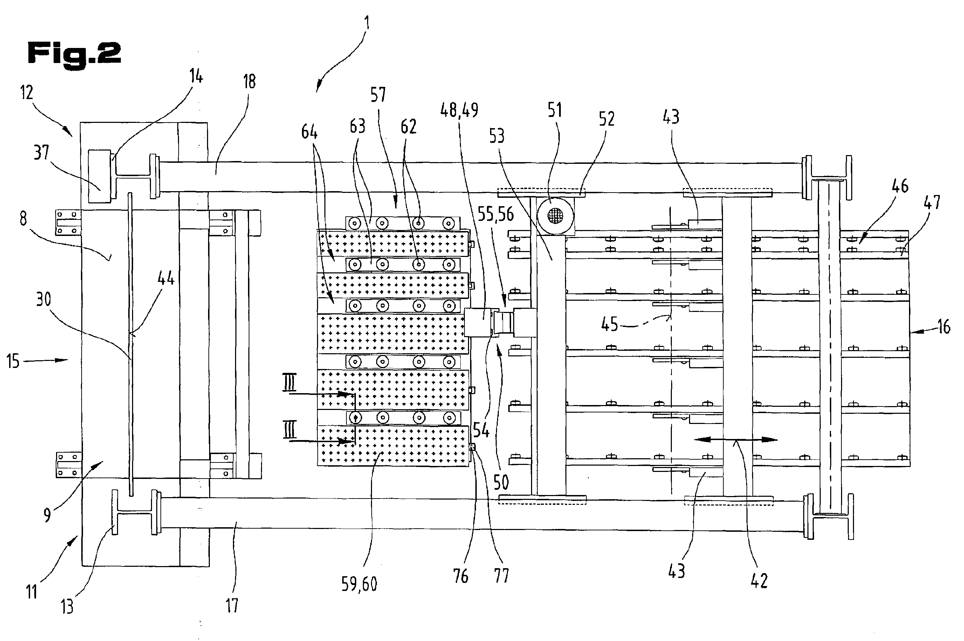

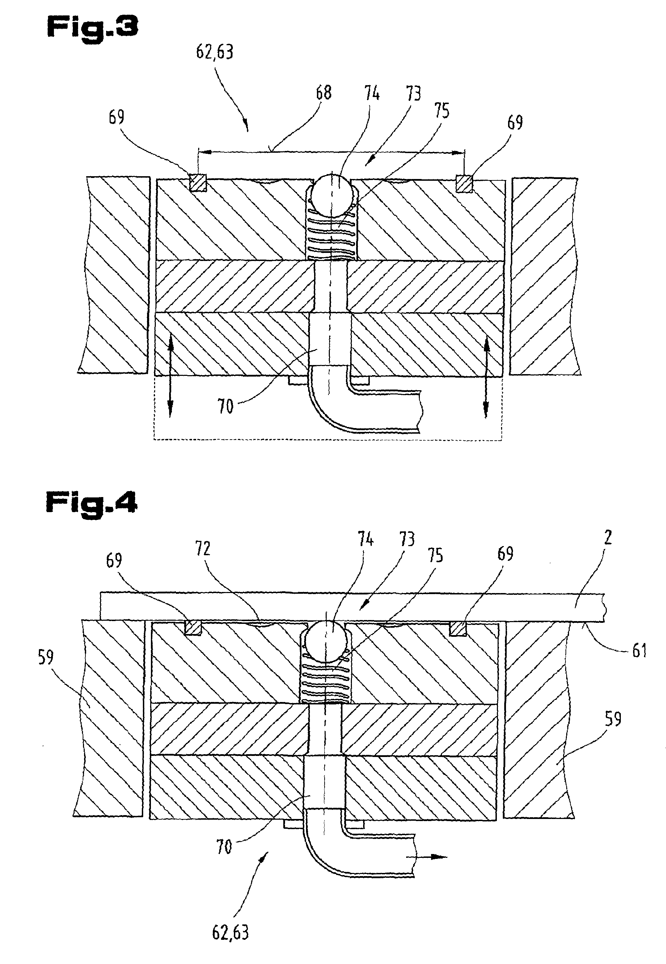

In den Fig. 1 und 2 ist eine erfindungsgemäße Bearbeitungseinrichtung 1 für eine Säge- und/oder Fräs- und/oder Bohrbearbeitung von plattenförmigen Werkstücken 2 mit einem ersten Bearbeitungsaggregat 3 vereinfacht schematisch dargestellt. Ein Maschinengestell 4 mit Gestellfüßen 5 zur Abstützung auf einer Aufstandsfläche 6 bildet mit zwei zu dieser parallel verlaufenden Längsholmen 7 und einer zweiteiligen oder geschlitzten, auf den Längsholmen 7 aufliegenden Tischplatte 8 einen Maschinentisch 9. Die Oberseite der Tischplatte 8 bildet eine ebene und horizontale Auflagefläche 10 für die Werkstücke 2. An entgegengesetzten Stimendbereichen 11, 12 des Maschinentischs 9 sind die Auflagefläche 10 in vertikaler Richtung überragende Druckbalkentürme 13, 14 angeordnet.

Die Bedienung der Bearbeitungseinrichtung 1 und die manuelle Zuführung von Werkstücken 2 erfolgt hauptsächlich an einer Vorderseite 15, während an einer Rückseite 16 die Werkstücke im allgemeinen automatisiert zugeführt werden.

In den Stimendbereichen 11, 12 ist am Maschinengestell 4 und/oder den Druckbalkentürmen 13, 14 je zumindest ein, durch ein Profil gebildeter Führungsholm 17, 18 in einer parallel zur Aufstandsfläche 6 und rechtwinkelig zur Längserstreckung der Längsholme 7 verlaufenden Richtung angeordnet. Im Maschinentisch 9 ist längs einer linearen Führungsanordnung 19, gebildet durch an den Längsholmen 7 befestigte Führungsschienen z.B. Rundstangen 20, ein Laufwagen 21 mit dem ersten Bearbeitungsaggregat 3, im gezeigten Ausführungsbeispiel eine Kreissägevorrichtung 22 mittels eines Laufwagenantriebes 23 verstellbar angeordnet. Die Kreissägevorrichtung 22, bestehend aus einem Antriebsmotor 24 und einer mit dem Sägeblatt 25 bestückten Sägewelle 26 ist im Laufwagen 21 mittels Stellantrieb 27 entlang von zur Aufstandsfläche 6 senkrecht verlaufenden Führungen 28 gemäß einem Doppelpfeil 29 verstellbar. Dadurch kann ein Teil des Sägeblatts 25 für die Durchführung der Bearbeitung am Werkstück 2 durch einen Schlitz 30 in der Tischplatte 8 über die Auflagefläche 10 angehoben werden.

Für ein Spannen des Werkstücks 2 während eines Bearbeitungsvorganges ist die Bearbeitungsvorrichtung 1 mit einer Niederhalteeinrichtung 31 versehen. Diese umfasst im Wesentlichen einen sich horizontal zwischen den Druckbalkentürmen 13, 14 erstreckenden, über dem und parallel zum Schlitz 30 angeordneten Druckbalken 32, der in den Endbereichen jeweils durch ein Stellmittel 33, z.B. einen Fluidzylinder 34 entlang von an den Druckbalkentürmen 13, 14 angeordneten Führungssäulen 35 verstellbar geführt ist.

Der Druckbalken 32 weist um den Durchtritt des Sägeblattes 25 durch das Werkstück 2 zu ermöglichen eine in der Ebene des Sägeblattes 25 verlaufende schlitzförmige Öffnung 36 auf, die der Auflagefläche 10 zugewandt ist.

Die Stellmittel 33, die selbstverständlich auch durch elektromotorisch betriebene Zahnstangen- oder Spindeltriebe gebildet sein können, sowie der Antriebsmotor 24 der Kreissägevorrichtung 22 und der Vorschubantrieb 23 sind über Leitungen mit einer Steuer- und Regeleinrichtung 37 der Bearbeitungseinrichtung 1 verbunden.

Zur Manipulation des Werkstücks 2 weist die Bearbeitungseinrichtung 1 weiters eine Vorschubeinrichtung 38 mit einen sogenannten Breitenanschlag 39 auf, der mittels eines Vorschubantriebs 40 entlang von Führungsbahnen 41 der Führungsholme 17, 18 gemäß Doppelpfeil 42 verstellbar ist und der mit, in Verstellrichtung - gemäß Doppelpfeil 42 - gesehen, horizontal voneinander beabstandeten Spannzangen 43 bestückt ist. Der Vorschubantrieb 40 der Vorschubeinrichtung 38 wird beispielsweise ebenfalls durch Rollapparate und einen elektromotorisch betriebenen Zahnstangentrieb gebildet.

Der Breitenanschlag 39 definiert eine parallel zu einer Schnittebene 44 des Kreissägeblatts 24 und rechtwinkelig zur Vorschubrichtung gemäß Doppelpfeil 42 verlaufende, vertikale Breitenanschlagebene 45 für ein Werkstück 2 oder mehrere übereinander liegende Werkstücke 2.

Die Auflagefläche 10 ist im Bereich der Vorderseite 15 der Bearbeitungseinrichtung 1 durch die Tischplatte 8 des Maschinentisches 9 gebildet, während im Bereich der Rückseite 16 der Bearbeitungseinrichtung 1 die Auflagefläche 10 durch eine Zuführeinrichtung 46 gebildet ist. Diese kann als Tisch mit Öffnungen zur Aufnahme der unter die Auflagefläche 10 ragenden Teile der bewegten Spannzangen 43 ausgebildet sein, oder ist zur Senkung der zum Werkstücktransport erforderlichen Vorschubkräfte vorzugsweise mit Rollenschienen 47 oder als Röllchenbahn, etc. ausgebildet.

Die Bearbeitungseinrichtung 1 weist weiters im Bereich zwischen dem Druckbalken 32 der Niederhalteeinrichtung 31 und dem verstellbaren Breitenanschlag 39 der Vorschubeinrichtung 38 ein zweites Bearbeitungsaggregat 48, z.B. eine Bohr- und/oder Fräseinheit 49, auf, welche auf einem Vorrichtungsträger 50 angeordnet ist. Dieser ist im gezeigten Ausführungsbeispiel an einem, sich zwischen den Führungsholmen 17, 18 erstreckenden und an diesen mittels eines Stellantriebes 51 und einer Führungsanordnung 52 verstellbar gelagerten Träger 53 angeordnet. Die Bohr- und/oder Fräseinheit 49 ist mittels einer Linearantriebsanordnung 54 relativ zum Vorrichtungsträger 50 vertikal verstellbar, welcher seinerseits mittels eines Stellantriebes 55 entlang einer Führungsanordnung 56 am Träger 53 verstellbar gelagert ist. Durch diese drei jeweils zueinander rechtwinkeligen Bewegungsmöglichkeiten erstreckt sich der mögliche Arbeitsbereich oder Arbeitsraum der Bohr- und/oder Fräseinheit 49 über den Großteil des zwischen Schnittebene 44 und Breitenanschlagebene 45 liegenden Teils der Auflagefläche 10.

Das zweite Bearbeitungsaggregat 48 kann aber auch an der Vorschubeinrichtung 38 oder an der Niederhalteeinrichtung 31 angeordnet sein.

Zwischen dem Maschinentisch 9 und der Zuführeinrichtung 46 bildet der erfindungsgemäße Auflagetisch 57 einen weiteren Teil der Auflagefläche 10. Dieser weist ein Maschinengestell 58 auf, das aber auch durch das Maschinengestell 4 der Bearbeitungseinrichtung 1 gebildet sein kann. Auf diesem Maschinengestell 58 sind mehrere Tischelemente 59 angeordnet, deren Oberseiten in der Auflagefläche 10 liegen. Die einzelnen Tischelemente 59 sind zur Verringerung der Reibungskräfte zwischen Werkstück 2 und Auflagefläche 10 bei der Vorschubbewegung als Luftkissentisch 60 ausgebildet. Diese an sich bekannten Luftkissentische 60 weisen an der Oberseite Öffnungen auf, durch welche eine Werkstückunterseite 61 mit Druckluft beaufschlagt werden kann, wodurch diese mit geringem Reibungswiderstand auf einem Luftpolster über die Auflagefläche 10 geschoben werden können. Da ein Werkstück in vielen Fällen nicht alle Öffnungen der Luftkissentische 60 abdeckt, sind die einzelnen Öffnungen jeweils mit einem Kugelventil ausgestattet, wobei teilweise über die Auflagefläche 10 hinausragende, als Ventilelement wirkende Kugeln bei Kontakt mit einer Werkstückunterseite 61 entgegen einer Federkraft in den Luftkissentisch 60 gedrückt werden und die Öffnung zum Durchtritt von Druckluft freigegeben wird.

Die Druckluftbeaufschlagung der Werkstückunterseite 61 kann zwischen den einzelnen Vorschubbewegungen bedarfsweise unterbrochen werden, wodurch das Werkstück 2 direkt auf dem Auflagetisch 57 aufliegt und für die Bearbeitung durch das erste oder zweite Bearbeitungsaggregat 3, 48 fixiert werden kann.

Der Auflagetisch 57 weist weiters zumindest ein Vakuumelement 62 auf, mit dem ein Werkstück 2 gegen die, die Auflagefläche 10 bildenden Tischelemente 59 gespannt werden kann. In der gezeigten Ausführung sind jeweils mehrere Vakuumelemente 62 entlang einer Geraden zu Vakuumleisten 63 verbunden. Diese Vakuumleisten 63 bilden in der Draufsicht mit den Tischelementen 59 eine zusammenhängende Fläche, wobei die Vakuumleisten 63 jeweils mit einer Längskante an einem Tischelement 59 angrenzen und mehrere Vakuumleisten 63 in von den Tischelementen 59 gebildeten Zwischenräumen 64 angeordnet sind. Die Längsachsen der Vakuumleisten 63 sind in der beschriebenen Ausführung parallel zur Vorschubrichtung gemäß Doppelpfeil 42 ausgerichtet und die vertikalen Längsmittelebenen der Vakuumleisten gehen durch die Spannzangen 43.

Die Vakuumelemente 62 oder die Vakuumleisten 63 sind durch einen Stellantrieb 65 entlang einer Führungsanordnung 66 aus einer mit der Auflagefläche 10 bündigen Arbeitsstellung in eine unterhalb der Auflagefläche 10 liegende Ruhestellung verstellbar im Maschinengestell 58 gelagert. Der durch das Absenken in die Ruhestellung entstandene freie Raum ermöglicht eine ungestörte Bewegung der Spannzangen 43 während des Vorschubes, da die unter der Auflagefläche 10 liegenden Teile, wie z.B. die unter die Werkstückunterseite 61 greifenden Spannzangenhälften sich im durch das Absenken entstandenen freien Raum bewegen.

Die einzelnen Vakuumelemente 62 und/oder Vakuumleisten 63 können jeweils einen eigenen Stellantrieb 65 und eine eigene Führungsanordnung 66 aufweisen, womit alle individuell von der Steuer- und Regeleinrichtung 37 oder von Hand geschaltet zwischen unterer Ruhestellung und oberer Arbeitsstellung verstellt werden. Insbesondere wenn eine Bearbeitung des Werkstücks 2 bis unter die Auflagefläche 10 reicht, z.B. beim Durchbohren durch das Werkstück 2 ist ein individuelles Absenken einzelner Vakuumelemente 62 oder Vakuumleisten 63 vorteilhaft. In der gezeigten Ausführung sind hingegen alle Vakuumleisten 63 mit einem Tragorgan 67 verbunden das über den Stellantrieb 65 und die Führungsanordnung 66 in vertikaler Richtung verstellt werden kann, wodurch alle Vakuumelemente 62 gleichzeitig gehoben oder gesenkt werden können. Der Führungsanordnung kann durch eine Linearführung, aber z.B. auch eine Schwenkführung gebildet sein, wobei z.B. die Führungsanordnung 66 auch im Stellantrieb 65, z.B. bei einem Fluidzylinder integriert sein kann.

In Fig. 3 und 4 ist der Aufbau und die Funktionsweise eines Vakuumelements 62 in vereinfachter Schnittdarstellung gezeigt. Ein Vakuumelement 62 bilden an seiner Oberseite eine ebene Saugfläche 68 aus, die durch ein elastisches Dichtelement 69 begrenzt ist. Durch das Anlegen des Dichtelementes 69 beim Anheben des Vakuumelements 62 an eine Werkstückunterseite 61 (siehe Fig. 4) wird ein über einen Kanal 70 mit einer Evakuierungseinrichtung 71 verbundener Saugraum 72 abgedeckt und durch Evakuieren der im Saugraum 72 enthaltenen Luft ein Unterdruck erzeugt, wodurch das Werkstück 2 vom Umgebungsdruck gegen das Dichtelement 69 gedrückt wird. Das Vakuumelement 62 ist vertikal so eingestellt, dass das Dichtelement 69 ohne Kontakt mit einer Werkstückunterseite 61 minimal über die Auflagefläche 10 hinausragt, beim Aufbau des Vakuums durch den Anpressdruck komprimiert wird und die Werkstückunterseite 61 gegen die von den Tischelementen 59 gebildete Auflagefläche 10 gepresst wird. Damit ist die vertikale Position des Werkstücks 2 durch die Oberkante der Tischelemente 59 definiert und nicht durch die vertikale Position des Vakuumelementes 62, wodurch mögliche Ungenauigkeiten bei der vertikalen Verstellung der Vakuumelemente 62 oder Abnützungserscheinungen an den Dichtelementen 69 keinen Einfluss auf die vertikale Lage des Werkstücks 2 haben.

Jedes Vakuumelement 62 ist vorteilhaft mit einem Ventil 73 zum Verschließen des Kanals 70 ausgestattet, um zu verhindern, das durch Vakuumelemente 62, die nicht von einem Werkstück 2 belegt sind, unnötig Luft zur Evakuierungseinrichtung 71 strömt und dadurch der erzielbare Unterdruck durch sogenannte Falschluft beeinträchtigt wird.

In der gezeigten Ausführung umfasst das Ventil 73 ein kugelförmiges Ventilelement 74, das bei geschlossenem Ventil 73 mittels eines Federelements 75 gegen einen Ventilsitz gedrückt wird und dadurch der Kanal 70 vom Saugraum 72 zur Evakuierungseinrichtung 71 verschlossen wird. Das Ventilelement 74 ragt in diesem Ruhezustand über die vom Dichtelement 69 begrenzte Saugfläche 68 hinaus.

Wird das Ventilelement 73 nun beim Anlegen des Dichtelements 69 an eine ebene Werkstückunterseite 61 entgegen der Federkraft nach unten in eine mit der Auflagefläche 10 bündige Position verschoben, wird im Ventilsitz ein Ringspalt frei und der Saugraum 72 über den Kanal 70 mit der Evakuierungseinrichtung 71 verbunden und evakuiert. Durch den entstehenden Unterdruck im Saugraum 72 wird das Werkstück 2 vom Vakuumelement 62 angezogen und die Werkstückunterseite 61 gegen die Auflagefläche 10 der Tischelemente 59 gepresst. Abhängig von der Anzahl der aktiven Vakuumelemente 62, der jeweils wirksamen Saugfläche 68, der Luftdurchlässigkeit des Werkstücks 2, des von der Evakuierungseinrichtung 71 ermöglichten Unterdrucks und weiteren Faktoren ist dadurch eine Fixierung des Werkstücks 2 möglich, die den bei der Bearbeitung auftretenden Kräften mit ausreichender Sicherheit standhält.

Zum Beenden des Spannvorganges an einem oder allen Vakuumelementen 62 und/oder Saugleisten 63 wird der Kanal 70 zwischen Saugraum 71 und Evakuierungseinrichtung 71 durch ein nicht dargestelltes, von der Steuer- und Regeleinrichtung oder von Hand geschaltetes Steuerventil unterbrochen. Um den Unterdruck im Saugraum und das Werkstück schneller lösen zu können, kann im Saugraum durch einen über den Kanal 70 oder einen gesonderten Luftkanal geführten Druckluftstoß der Abbau des Unterdrucks beschleunigt werden. Gleichzeitig wird zum Lösen des Werkstücks 2 das Vakuumelement 62 oder die Vakuumleiste 63 in die Ruhestellung abgesenkt, sodass die Saugflächen 68 unterhalb der Auflagefläche 10 zu liegen kommen.

Die einzelnen Vakuumelemente 62 sind vorteilhaft verschiedenen Vakuumkreisen zugeordnet, wobei jeder Kreis extra angesteuert und überwacht sein kann. Die Evakuierungseinrichtung kann durch einen Vakuumerzeuger unterschiedlicher Bauart, wie z.B. Vakuumpumpe, Vakuumgebläse, Ejektorpumpe gebildet sein.

Die kleinstmögliche Werkstückgröße ist von den Abmessungen des Dichtelements 69 abhängig, um eine ausreichende Sicherheit gegen Verdrehen des Werkstückes zu gewährleisten, ist vorgesehen, dass ein zu spannendes Werkstück 2 zumindest bei zwei Vakuumleisten 63 jeweils ein Vakuumelement 62 vollständig abdeckt. Da der Abstand zwischen den Vakuumleisten 63 mit den Abständen zwischen den Spannzangen 43 der Vorschubeinrichtung 38 übereinstimmt ist, in diesem Fall auch das sichere Spannen beim Vorschubvorgang durch zumindest zwei Spannzangen 43 gewährleistet.

Während der Bearbeitung kann das Werkstück 2 zusätzlich zur Aufspannung am erfindungsgemäßen Auflagetisch 57 bei entsprechend großen Abmessungen noch durch den Druckbalken 32 der Niederhaltevorrichtung 31 und/oder die Spannzangen 43 fixiert sein.

Die Bearbeitungseinrichtung 1 weist weiters zwischen Auflagetisch 57 und Zuführeinrichtung 46 zumindest zwei Anschlagelemente 76 auf, die mittels einer Führungs- und Antriebsanordnung 77 aus einer unter der Auflagefläche 10 liegenden Ruheposition in eine die Auflagefläche überragende rechtwinkelig nach oben überragende Arbeitsposition verstellbar sind.

Die Anschlagelemente 76 bilden in der Arbeitsposition eine zusätzliche, zur Schnittebene 44 und Breitenanschlagebene parallele Anschlagebene 78 für zur Rückseite 16 der Bearbeitungseinrichtung 1 weisende Kanten eines Werkstückes 2. Die Führungs- und Antriebsanordnung 77 kann durch einen Linearantrieb z.B. einen Fluidzylinder gebildet sein, aber auch aus getrennten Elementen, z.B. an einer gemeinsamen Welle befestigten Anschlagelementen 76, die durch einen Fluidzylinder in die Arbeitsposition eingeschwenkt werden. Diese zusätzliche Anschlagebene 78 dient ebenfalls der Positionierung der Werkstücke 2 innerhalb der Bearbeitungseinrichtung 1. Da der vertikal feststehende, untere Kontaktpunkt der Spannzangen 43 die Auflagefläche 10 eine kleine Strecke - bis zu wenigen mm - überragen kann, um das Reibungswiderstand beim Werkstückvorschub zu verringern, verhindern die in Arbeitsposition verstellten Anschlagelemente 76 auch, dass ein Werkstück 2 nach der Positionierung durch den Breitenanschlag 39 von den gelösten Spannzangen 43 beim Verfahren des Breitenanschlages 39 aus seiner definierten Position verschoben wird.

Neben dem Breitenanschlag 39 weist die Bearbeitungseinrichtung 1 auch einen nicht dargestellten, eine vertikal und rechtwinkelig zur Breitenanschlagebene ausgerichtete Seitenanschlagebene ausbildenden, Seitenanschlag auf, der, wie aus dem Stand der Technik bekannt, feststehend am Maschinengestell 4 oder relativ zu diesem, manuell oder von der Steuer- und Regeleinrichtung 37 gesteuert, verstellbar ausgebildet sein kann.

Erwähnt sei selbstverständlich, dass die Bearbeitungseinrichtung 1 mit einer Reihe von Messeinrichtungen, Überwachungssensoren, etc. ausgestattet ist und die Steuer- und Regeleinrichtung 37 Rechner- und Speichereinrichtungen umfasst und neben vom Bediener einzugebenden Daten bevorzugt unmittelbar aus der Konstruktion stammende CAD-Daten zur Programmierung eines Fertigungsablaufes verarbeitbar sind.

Die beschriebenen Ausführungsbeispiele zeigen mögliche Ausführungsvarianten des Auflagetisches 57 und der Bearbeitungseinrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Bearbeitungseinrichtung diese bzw. deren Bestandteile teilweise unmaßstäblich und/oder vergrößert und/oder verkleinert dargestellt wurden.

Vor allem können die einzelnen in den Fig. 1, 2; 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Bearbeitungseinrichtung
- 2: Werkstück
- 3: Bearbeitungsaggregat
- 4: Maschinengestell
- 5: Gestellfuß

- 6: Aufstandsfläche
- 7: Längsholm
- 8: Tischplatte
- 9: Maschinentisch
- 10: Auflagefläche

- 11: Stirnendbereich
- 12: Stirnendbereich
- 13: Druckbalkenturm
- 14: Druckbalkenturm
- 15: Vorderseite

- 16: Rückseite
- 17: Führungsholm
- 18: Führungsholm
- 19: Führungsanordnung
- 20: Rundstange

- 21: Laufwagen
- 22: Kreissägevorrichtung
- 23: Laufwagenantrieb
- 24: Antriebsmotor
- 25: Sägeblatt

- 26: Sägeweile
- 27: Stellantrieb
- 28: Führungen
- 29: Doppelpfeil
- 30: Schlitz

- 31: Niederhalteeinrichtung
- 32: Druckbalken
- 33: Stellmittel
- 34: Fluidzylinder
- 35: Führungssäule

- 36: Öffnung
- 37: Steuer- und Regeleinrichtung
- 38: Vorschubeinrichtung
- 39: Breitenanschlag
- 40: Vorschubantrieb

- 41: Führungsbahn
- 42: Doppelpfeil
- 43: Spannzange
- 44: Schnittebene
- 45: Breitenanschlagebene

- 46: Zuführeinrichtung
- 47: Rollenschiene
- 48: Bearbeitungsaggregat
- 49: Bohr- und/oder Fräseinheit
- 50: Vorrichtungsträger

- 51: Stellantrieb
- 52: Führungsanordnung
- 53: Träger
- 54: Linearantriebsanordnung
- 55: Stellantrieb

- 56: Führungsanordnung
- 57: Auflagetisch
- 58: Maschinengestell
- 59: Tischelement
- 60: Luftkissentisch

- 61: Werkstückunterseite
- 62: Vakuumelement
- 63: Vakuumleiste
- 64: Zwischenraum
- 65: Stellantrieb

- 66: Führungsanordnung
- 67: Tragorgan
- 68: Saugfläche
- 69: Dichtelement
- 70: Kanal

- 71: Evakuierungseinrichtung
- 72: Saugarm
- 73: Ventil
- 74: Ventilelement
- 75: Federelement

- 76: Anschlagelement
- 77: Führungs- und Antriebsorgan
- 78: Anschlagebene

## Patentansprüche

1. Auflagetisch (57) mit einer horizontalen Auflagefläche (10) für Werkstücke umfassend ein Maschinengestell (58) mit einem daran angeordneten, zumindest einen Teil der Auflagefläche (10) ausbildenden Tischelement (59), **dadurch gekennzeichnet, dass** am Maschinengestell (58) ein Vakuumelement (62) zum Spannen eines Werkstücks (2) gegen das Tischelement (59) angeordnet ist.

2. Auflagetisch (57) nach Anspruch 1, **dadurch gekennzeichnet, dass** das Vakuumelement (62) durch einen Stellantrieb (65) entlang einer Führungsanordnung (66) aus einer mit der Auflagefläche (10) bündigen Arbeitsstellung in eine unterhalb der Auflagefläche (10) liegende Ruhestellung verstellbar ist.

3. Auflagetisch (57) nach Anspruch 1 oder 2, **dadurch gekennzeichnet, dass** am Maschinengestell (58) zumindest eine, vorzugsweise mehrere jeweils zumindest zwei entlang einer Geraden angeordnete Vakuumelemente (62) umfassende Vakuumleiste (63) angeordnet ist bzw. sind.

4. Auflagetisch (57) nach einem der Ansprüche 1 bis 3, **dadurch gekennzeichnet, dass** die Auflagefläche (10) aus mehreren Tischelementen (59) und zusätzlich aus mehreren unmittelbar an die Tischelemente (59) angrenzenden Vakuumelementen (62) und/oder Vakuumleisten (63) gebildet ist.

5. Auflagetisch (57) nach einem der Ansprüche 1 bis 4, **dadurch gekennzeichnet, dass** die Auflagefläche (10) aus einer Abfolge von abwechselnd jeweils einem Tischelement (59) und einer daran unmittelbar angrenzenden Vakuumleiste (63) gebildet ist.

6. Auflagetisch (57) nach einem der Ansprüche 1 bis 5, **dadurch gekennzeichnet, dass** zwei oder mehr Vakuumelemente (62) und/oder Vakuumleisten (63) auf einem, relativ zum Maschinengestell (58) durch einen Stellantrieb (65) entlang einer Führungsanordnung (66) vertikal verstellbaren, Tragorgan (67) angeordnet sind.

7. Auflagetisch (57) nach einem der Ansprüche 1 bis 6, **dadurch gekennzeichnet, dass** das Tischelement (59) Öffnungen für die bedarfsweise Beaufschlagung einer Werkstückunterseite (61) mit Druckluft aufweist, die über einen Druckluftkanal mit einer Druckluftquelle verbunden sind.

8. Auflagetisch (57) nach Anspruch 7, **dadurch gekennzeichnet, dass** jede der Öffnungen mit einem Ventil ausgestattet ist, das im Ruhezustand ohne Berührung durch ein Werkstück (2) durch eine Feder geschlossen ist und im Betriebszustand durch Berührung mit einem Werkstück (2) geöffnet ist.

9. Auflagetisch (57) nach einem der Ansprüche 1 bis 8, **dadurch gekennzeichnet, dass** das Vakuumelement (62) an einer nach oben offenen Saugfläche (68) ein durch eine Werkstückunterseite (61) betätigbares, den auf dem Vakuumelement (62) aufliegenden Abschnitt der Werkstückunterseite (61) durch Verbindung mit einer Evakuierungseinrichtung (71) mit einem Vakuum beaufschlagendes Ventil (73) aufweist.

10. Auflagetisch (57) nach Anspruch 9, **dadurch gekennzeichnet, dass** das Ventil (73) ein verschiebbar gelagertes Ventilelement (74) umfasst, das im Ruhezustand durch ein im Ventil (73) angeordnetes Federelement (75) das Ventil schließt (73) und das Ventilelement (74) dabei über die Auflagefläche (10) hinausragt und im Betriebszustand durch Kontakt mit einer Werkstückunterseite (61) entgegen der Kraft des Federelements (75) in eine mit der Auflagefläche (10) bündige Lage verschoben ist, wodurch das Ventil (73) geöffnet ist.

11. Bearbeitungseinrichtung zur spanenden oder spanlosen Bearbeitung von Werkstücken (2), mit einer durch einen Auflagetisch (57) gebildeten, horizontalen Auflagefläche (10) für die Werkstücke (2), **dadurch gekennzeichnet, dass** der Auflagetisch (57) nach einem oder mehreren der Ansprüche 1 bis 10 ausgebildet ist.

12. Bearbeitungseinrichtung (1) für plattenförmige Werkstücke (2), insbesondere Plattenaufteilsäge, mit einem Maschinengestell (4), einem Maschinentisch (9), einer Zuführeinrichtung (46) für die Werkstücke (2), wobei durch Maschinentisch (9) und Zuführeinrichtung (46) eine horizontale Auflagefläche (10) gebildet ist, einem oberhalb des Maschinentischs (9) angeordneten, in zur Auflagefläche (10) senkrechter Richtung verstellbaren Druckbalken (32) zum Spannen des Werkstücks (2) gegen die Auflagefläche (10), einem im Maschinengestell (4) in einer Führungsanordnung (19) mit einem Laufwagenantrieb (23) horizontal verstellbaren Laufwagen (21) mit zumindest einem Bearbeitungsaggregat (3), insbesondere einer Kreissägevorrichtung (22), eine mit Greifmitteln versehene und in zu einer Verstellrichtung des Laufwagens (21) senkrechten Bewegungsrichtung mittels eines Vorschubantriebes (40) entlang von Führungsbahnen (41) horizontal verstellbare Vorschubeinrichtung (38) zur Bewegung der Werkstücke (2) entlang der Auflagefläche (10), eine Steuer- und Regeleinrichtung (37) für die Bearbeitungseinrichtung (1), **dadurch gekennzeichnet, dass** zwischen Maschinentisch (9) und Zuführeinrichtung (46) zumindest ein Teil der Auflagefläche (10) von einem Auflagetisch (57) nach einem oder mehreren der Ansprüche 1 bis 10 gebildet ist.

13. Bearbeitungseinrichtung (1) nach Anspruch 12, **dadurch gekennzeichnet, dass** oberhalb der Auflagefläche (10) zumindest ein zweites Bearbeitungsaggregat (48) angeordnet ist, wobei sich dessen Arbeitsraum zumindest über einen Teil des Auflagetisches (57) erstreckt.

14. Bearbeitungseinrichtung (1) nach Anspruch 12 oder 13, **dadurch gekennzeichnet, dass** mehrere, jeweils zumindest zwei entlang einer Geraden angeordnete Vakuumelemente (62) umfassende und jeweils in einem Zwischenraum (64) zwischen zwei benachbarten Tischelementen (59) angeordnete Vakuumleisten (63) parallel zur Bewegungsrichtung des Breitenanschlages (39) ausgerichtet sind und im abgesenkten Zustand die Zwischenräume (64) zwischen zwei benachbarten Tischelementen (59) jeweils einen nutförmigen Bewegungsraum für unterhalb der Ebene der Auflagefläche (10) angeordnete Teile des Breitenanschlags (39) bilden.

15. Bearbeitungseinrichtung (1) nach einem der Ansprüche 12 bis 14, **dadurch gekennzeichnet, dass** diese zumindest zwei durch eine Führungs- uns Antriebsanordnung (77) zwischen einer unterhalb der Auflagefläche (10) liegenden Ruheposition und einer die Auflagefläche (10) zwischen Auflagetisch (57) und Zuführeinrichtung (46) rechtwinkelig nach oben überragenden Arbeitsposition verstellbare, Anschlagelemente (76) aufweist, diese in der Arbeitsposition eine zur Breitenanschlagebene (45) parallele Anschlagebene (78) bilden.
